# EUROPÄISCHE PATENTSCHRIFT

(11) **EP 3 526 103 B1**
(45) Veröffentlichungstag und Bekanntmachung des Hinweises auf die Patenterteilung: **09.06.2021**
(21) Anmeldenummer: 17783492.6
(22) Anmeldetag: 12.10.2017
(51) Int. Cl.: B62D 5/04, F16H 55/24, F16C 35/077

(54) **ELEKTROMECHANISCHE SERVOLENKUNG MIT GEFEDERTER LAGERANORDNUNG**
ELECTROMECHANICAL SERVO STEERING SYSTEM HAVING A SPRING-LOADED BEARING ARRANGEMENT
DIRECTION ASSISTÉE ÉLECTROMÉCANIQUE COMPRENANT UN AGENCEMENT DE PALIER À RESSORT

(30) Priorität: 14.10.2016 DE 102016012246
(43) Veröffentlichungstag der Anmeldung: 21.08.2019
(73) Patentinhaber: thyssenkrupp Presta AG, 9492 Eschen (LI); thyssenkrupp AG, 45143 Essen (DE)
(72) Erfinder: BRASSEL, Michael, 9470 Buchs (CH); SCHLEGEL, Ulrich, 7304 Maienfeld (CH); DÄLLENBACH, Mario, 6037 Root (CH); DONA, Michael, 6713 Ludesch (AT)
(74) Vertreter: thyssenkrupp Intellectual Property GmbH
(86) Internationale Anmeldenummer: PCT/EP2017/076006
(87) Internationale Veröffentlichungsnummer: WO 2018/069423

(56) Entgegenhaltungen:
- DE-A1- 10 161 715
- DE-A1-102008 001 878
- DE-A1-102008 042 608
- DE-A1-102009 016 187
- DE-A1-102009 054 655
- DE-A1-102012 103 147
- DE-A1-102015 208 334
- DE-U1-202016 103 802

## Beschreibung

Die vorliegende Erfindung betrifft eine elektromechanische Servolenkung mit den Merkmalen des Oberbegriffs des Anspruchs 1.

In elektromechanischen Servolenkungen wird über einen Elektromotor ein Drehmoment erzeugt, das auf ein Getriebe übertragen und dort dem vom Fahrer gestellten Lenkmoment überlagert wird.

Eine gattungsgemäße elektromechanische Servolenkung weist einen elektrischen Servomotor auf, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind. Die Schneckenwelle ist mit der Motorwelle des elektrischen Servomotors über eine Kupplung verbunden.

Die DE 10 2008 001 878 A1 offenbart ein Schwenklager für ein Schneckengetriebe, wobei mittels eines kardanisch gelagerten Lagerrings die Schnecke gelagert wird. Der Lagerring weist dabei eine Schwenkachse auf, welche senkrecht zur Drehachse und in Richtung des Schneckenrads verläuft. Als nachteilig erweist sich diese Ausgestaltung, da die Kupplung stärker belastet wird, wodurch die Kupplung mit der Zeit schneller verschleißt und ein vergrößertes Zahnflankenspiel mit entsprechenden Vibrationsgeräuschen auftritt.

Weiterhin ist es bekannt, das Lager mit großem Spiel auszugestalten, so dass die gewünschte Verschwenkbarkeit möglich ist. Diese Methode ist jedoch problematisch dahingehend, dass durch große Bauteiltoleranzen unterschiedliche Wärmeausdehnungen entstehen.

Aus der Offenlegungsschrift DE 10 2009 016 187 A1 ist ein Schwenklager bekannt, das Federelemente aufweist, die das Lager zum Gehäuse hin abstützen. Dabei ist vorgesehen, dass die Federkraft nicht gleichmäßig auf den Umfang verteilt ist, so dass an dem Lagerelement ein Schwenkmoment in Form eines Kippmoments erzeugt wird. Dieses Kippmoment ist so gerichtet, dass der Lagerring und damit die Welle gezielt in eine Schwenkrichtung vorgespannt und mit einer Mittelachse zur Rotationsachse geneigt sein können. Im Lenkgetriebe kann somit die Schneckenwelle gezielt in Richtung eines spielfreien Zahneingriffs gegen die Verzahnung des Schneckenrads vorgespannt werden. Das Federelement dreht sich somit in Richtung der Schwenkbewegung, wodurch die Kupplung stärker belastet wird. Das hat zur Folge, dass die Kupplung stärker verschleißt und ein vergrößertes Zahnflankenspiel mit entsprechenden Vibrationsgeräuschen auftritt.

Aus der DE 10 2008 042 608 A1 oder der DE 20 2016 103 802 U1 ist es bekannt, genau zwei Federelemente vorzusehen, die in Umfangsrichtung der Lageranordnung gegenüberliegend angeordnet sind. Dabei können ebenfalls die genannten Probleme auftreten.

Aus der DE 10 2015 208 334 A1 und der DE 101 61 715 A1 sind gattungsgemäße Servolenkungen bekannt, bei denen ein schwenkbewegliches Lagerelement der Lageranordnung der Schneckenwelle mittels eines Federelements in Richtung des Zahneingriffs vorgespannt wird. Das Federelement ist als Schraubenfeder ausgebildet.

Das aus der DE 10 2012 103 147 A1 bekannte Federelement weist einen über ein flexibles Verbindungsteil mit einem Außenring verbundenen Innenring auf.

Diese Aufgabe wird von einer elektromechanischen Servolenkung mit den Merkmalen des Anspruchs 1 gelöst.

Demnach ist eine elektromechanische Servolenkung mit einem elektrischen Servomotor mit einer Motorwelle, der eine mit einem Schraubrad kämmende Welle antreibt, wobei die Welle in einem Getriebegehäuse angeordnet und an ihrem motornahen Ende in einer Lageranordnung um eine Drehachse drehbar gelagert ist und um eine quer zur Drehachse liegende Schwenkachse in dem Getriebegehäuse verschwenkbar gelagert ist, vorgesehen, wobei wenigstens ein Federelement vorgesehen ist, das ein mit der Welle um die Schwenkachse schwenkbewegliches Lagerelement der Lageranordnung federelastisch gegen ein im Getriebegehäuse ortsfest angeordnetes Lagerelement der Lageranordnung axial vorspannt und wobei erfindungsgemäß genau zwei Federelemente vorgesehen sind, die in Umfangsrichtung der Lageranordnung gegenüberliegend angeordnet sind, wobei weiter erfindungsgemäß die Schwenkachse der Schneckenwelle in einem definierten Winkel im Bereich zwischen 20° und 30° zu einer Drehachse des Schneckenrads angeordnet ist, wobei das wenigstens eine Federelement im Querschnitt im Wesentlichen U-förmig ist. Die Federelemente können dadurch besonders klein und ein im Getriebegehäuse ortsfest angeordnetes Lagerelement der Lageranordnung axial vorspannt und dass zwei Federelemente vorgesehen sind, die in Umfangsrichtung der Lageranordnung gegenüberliegend angeordnet sind, wobei erfindungsgemäß die Schwenkachse der Schneckenwelle in einem definierten Winkel im Bereich zwischen 20° und 30° zu einer Drehachse des Schneckenrads angeordnet ist.. Die Federelemente können dadurch besonders klein und kostengünstig gefertigt werden und ermöglichen eine beidseitige axiale Vorspannung und Zentrierung der Lageranordnung.

Erfindungsgemäß verläuft die Schwenkachse in einem definierten Winkel zwischen einer Achse eines Schwenkhebels um eine Drehachse des Schraubrads oder um eine Drehachse einer Lenkwelle. Der definierte Winkel ist erfindungsgemäß in einem Einbauzustand der Lagerung im Bereich zwischen 20° und 30° vorgesehen, besonders bevorzugt ist der definierte Winkel um 27° gegenüber. Bevorzugt ist das mindestens eine Federelement derart ausgestaltet, dass sich in einem eingebauten und unbelasteten Zustand der Lageranordnung die von der Vorspannung in Axialrichtung der Drehachse erzeugten Kräfte auf das um die Schwenkachse schwenkbewegliche Lagerelement aufheben. Das wenigstens eine Federelement erzeugt somit nur ein geringes Schwenkmoment im Vergleich zu einer einstellbaren Vorspannung, beispielsweise über eine Vorspanneinrichtung, sondern die Lageranordnung wird in der Neutralstellung gehalten. Dadurch wird eine erhöhte Steifigkeit im Nulldurchgang der Axialbewegung des Lagers erzeugt, sodass Geräusche reduziert werden können. Die federelastische Verbindung zwischen den Lagerelementen erlaubt eine Schwenkbewegung, die die Kupplung zwischen Motorwelle und Schneckenwelle weniger stark belastet und somit Geräusche reduziert.

Unter einem unbelasteten Zustand der Lageranordnung wird verstanden, dass keine externen Kräfte auf die Lageranordnung wirken und die Schneckenwelle sich in ihrer Normalstellung befindet und von der Schneckenwelle keine Kräfte auf die Lageranordnung ausgehen. Die Mittelachse der Schneckenwelle ist somit deckungsgleich mit der Rotationsachse der Motorwelle. Die Lageranordnung befindet sich in diesem Fall in einem unverschwenkten Zustand.

Vorzugsweise ist die Schwenkachse im Bereich der Lageranordnung angeordnet und durchsetzt diese.

Besonders bevorzugt wird das wenigstens eine Federelement von der Schwenkachse mittig durchsetzt. Das Federelement erzeugt somit nur geringe Kräfte. Dadurch, dass die Schwenkachse das Federelement mittig durchsetzt, kann eine ungleichmäßige Verschwenkung verhindert werden..

Vorzugsweise ist das um die Schwenkachse schwenkbewegliche Lagerelement ein Lagerring, welcher zumindest teilweise von dem im Getriebegehäuse ortsfest angeordneten Lagerelement umfangsseitig umgeben ist, wobei der Lagerring radial in dem Lagerelement abgestützt ist und relativ zu dem Lagerelement schwenkbar ist, und dass das wenigstens eine Federelement an dem Lagerelement befestigt ist, wobei der Lagerring mittels des wenigstens einen Federelements federelastisch gegen das Lagerelement zentriert vorgespannt ist.

Weiterhin bevorzugt ist das im Getriebegehäuse ortsfest angeordnete Lagerelement ein Schwenkring.

Vorzugsweise weist die Lageranordnung ein Wälzlager auf, dessen Außenring den Lagerring bildet, der verschwenkbar in dem getriebegehäusefesten Schwenkring angeordnet ist.

Es ist bevorzugt, dass das wenigstens eine Federelement derart ausgestaltet ist, dass die auf den Lagerring wirkende Federkraft für beide Schwenkrichtungen gleich ist, somit ist eine gleichmäßige Schwenkbewegung in beide Schwenkrichtungen möglich.

Es ist vorteilhaft, wenn das wenigstens eine Federelement das ortsfest angeordnete Lagerelement und das um die Schwenkachse schwenkbewegliche Lagerelement auf der jeweiligen Außenseite umgreift. Das wenigstens eine Federelement kann somit als eine Art Klammer ausgebildet sein.

Das wenigstens eine Federelement kann Konturen aufweisen, die mit entsprechenden Konturen des ortsfest angeordneten Lagerelements und/oder des um die Schwenkachse schwenkbeweglichen Lagerelements zusammenwirken und eine federelastische Verbindung zwischen dem ortsfest angeordneten Lagerelement und dem um die Schwenkachse schwenkbeweglichen Lagerelement bilden. Weiterhin ist es denkbar und möglich, dass das wenigstens eine Federelement kraftschlüssig und/oder reibschlüssig am Schwenkring angeordnet ist, sodass das Federelement gegen ein Getriebegehäuse abgestützt ist, auch dann, wenn sich das Federelement im Laufe der Lebensdauer von der Drehachse der Schnecke wegbewegt.

Es ist erfindungsgemäß dass das wenigstens eine Federelement im Querschnitt im Wesentlichen U-förmig ausgebildet ist, dadurch kann das Federelement besonders einfach und klein ausgestaltet sein.

In der erfindungsgemäßen Ausführungsform ist das Schraubrad ein Schneckenrad und die Welle eine Schneckenwelle.

Vorzugsweise steht das Schneckenrad mit einer Eingangswelle eines Lenkgetriebes eines Kraftfahrzeuges in Wirkverbindung und das Schneckenrad ist auf einer Lenkwelle eines Kraftfahrzeuges angeordnet.

Es ist weiterhin bevorzugt, dass das wenigstens eine Federelement aus Federstahl oder Kunststoff hergestellt ist.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine schematische Darstellung einer elektromechanischen Servolenkung;
- Figur 2:: eine räumliche Darstellung des Getriebes der Servolenkung aus Figur 1;
- Figur 3:: eine räumliche Darstellung des Getriebes der Figur 2 reduziert auf eine Schneckenwelle, ein erfindungsgemäßes Lager und ein Schneckenrad;
- Figur 4:: das Getriebe der Figur 2 in einem Längsschnitt entlang der Schneckenwelle;
- Figur 5:: eine Explosionszeichnung des erfindungsgemäßen Lagers der Schneckenwelle;
- Figur 6:: eine alternative Explosionszeichnung des erfindungsgemäßen Lagers der Schneckenwelle ;
- Figur 7:: einen Längsschnitt durch das erfindungsgemäße Lager; sowie
- Figur 8:: eine räumliche Darstellung des Getriebes der Figur 2 reduziert auf eine Schneckenwelle, ein erfindungsgemäßes Lager und ein Schneckenrad.

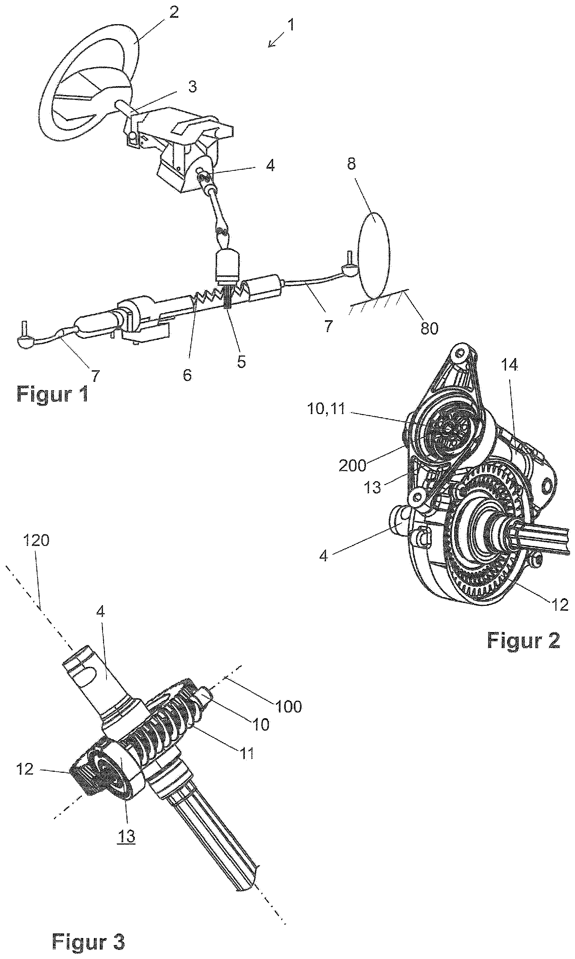

In der Figur 1 ist eine elektromechanische Kraftfahrzeuglenkung 1 mit einem Lenkrad 2, das mit einer oberen Lenkwelle 3 und einer unteren Lenkwelle 4 drehfest gekoppelt ist, schematisch dargestellt. Die obere Lenkwelle 3 steht über einen Torsionsstab in funktioneller Verbindung mit der unteren Lenkwelle 4. Die untere Lenkwelle 4 ist mit einem Ritzel 5 drehfest verbunden. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3, 4 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor einer Servoeinheit ist vorgesehen, um dem Fahrer bei dieser Lenkbewegung zu unterstützen. Die Servoeinheit kann dabei als Überlagerungslenkung an der Lenksäule oder als Hilfskraftunterstützungseinrichtung an dem Ritzel 5 oder der Zahnstange 6 angeordnet sein.

In der Figur 2 ist das Getriebe 9 der Servoeinheit dargestellt. Ein nicht dargestellter Servomotor treibt eine Schneckenwelle 10 an, die mit ihrer Schnecke 11 in Eingriff mit einem Schneckenrad 12 steht, dass mit der unteren Lenkwelle 4 oder dem Ritzel 5 drehfest verbunden ist. Bei einem Betrieb des Elektromotors wird die Schneckenwelle 10 angetrieben und die Schnecke 11 und das Schneckenrad 12 drehen sich entsprechend um eine Drehunterstützung für die untere Lenkwelle 4 bereitzustellen oder ein Unterstützungsmoment unmittelbar in das Ritzel 5 einzuleiten.

Die Figur 3 zeigt die Schneckenwelle 10 mit einer motornahen Lageranordnung 13 und das mit der Schneckenwelle 10 kämmende Schneckenrad 12 in einer perspektivischen Darstellung, wobei auf die Komponenten des Getriebegehäuses verzichtet wurden.

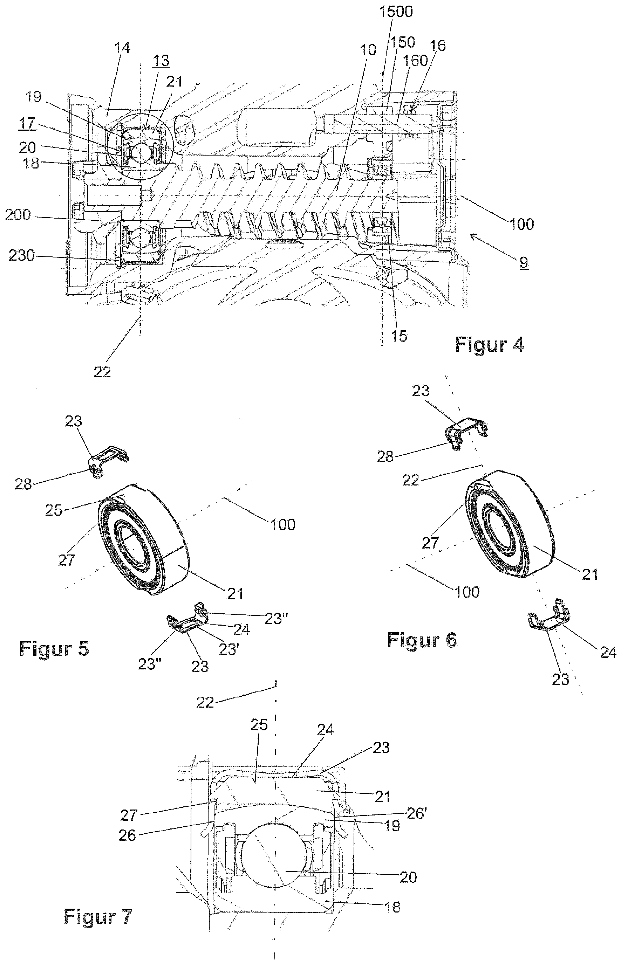

In Figur 4 ist in einem Längsschnitt ein Teil des Getriebes 9 dargestellt. Der Längsschnitt verläuft dabei entlang einer Drehachse 100 der Schneckenwelle 10, die von dem nicht dargestellten Elektromotor angetrieben ist, und einer Schwenkachse 22. Der Elektromotor verfügt über eine Motorwelle, die über eine Kupplung, welche aus zwei Kupplungsteilen besteht, mit der Schneckenwelle 10 drehfest gekoppelt ist. Dazu weist die Schneckenwelle 10 eine zylindrische Lagerbuchse auf, in die ein Kupplungsteil 200 eingesetzt wird. Die Schneckenwelle 10 kämmt über die Schneckenverzahnung mit dem Schneckenrad. Das Schneckenrad 12 wiederum ist drehfest mit beispielsweise einer Lenkwelle verbunden, die zwischen einem nicht dargestellten Lenkrad und dem eigentlichen Lenkgetriebe des Kraftfahrzeugs verläuft. Die genannten Bauelemente sind in einem gemeinsamen Getriebegehäuse 14 gelagert.

Die Schneckenwelle 10 ist in dem Getriebegehäuse 14 mittels der motornahen Lageranordnung 13 und eines motorfernen Lagers 15 gelagert. Die motornahe Lageranordnung 13 weist ein Festlager und ein Schwenklager auf. Zwischen dem Getriebegehäuse 14 und der motornahen Lageranordnung 13 kann ein Dichtungselement 230 vorgesehen sein, welches einseitig der Lageranordnung 13 angrenzend zum Kupplungsteil 200 oder beidseitig der Lageranordnung 13 ausgebildet ist. Das motorferne Lager 15 ist ein Wälzlager, welches als Kugellager ausgebildet ist und geringfügige Axialbewegungen und Änderungen der Drehachse der Schneckenwelle 10 gegenüber dem Getriebegehäuse 14 zulässt. Die Lage der Schneckenwelle 10 ist in Bezug auf das Schneckenrad 12 mittels einer Vorspanneinrichtung 16 einstellbar. Die Einstellung erfolgt dabei bevorzugt auf der motorfernen Seite der Schneckenwelle 10.

Die motornahe Lageranordnung 13 weist ein Wälzlager 17 mit einem Innenring 18, Wälzkörpern 20 und einem Außenring 19 auf. Die Wälzkörper 20 laufen in Rillen zwischen dem Innenring 18 und dem Außenring 19. Der Innenring 18 weist eine innenzylindrische Mantelfläche für einen Festsitz auf der Schneckenwelle 10 auf. Der Außenring 19 ist relativ zur Rotationsachse in einem Schwenkring 21 aufgenommen. Der Schwenkring 21 ist in dem Getriebegehäuse 14 aufgenommen, so dass der Innenring 18 zusammen mit der Schneckenwelle 10 gegenüber dem rotationsfesten Außenring 19 um die Rotationsachse 100 drehbar ist. Der Außenring 19 weist außenumfangsseitig eine sphärische Fläche auf, die konvex gekrümmt ist und die eine Kontaktfläche zu einer Kontaktfläche an dem Schwenkring 21 bildet. Die Kontaktfläche des Schwenkrings 21 ist konkav gekrümmt, so dass der Außenring 19 als schwenkbares Lagerelement in dem Schwenkring 21 um eine Schwenkachse 22 schwenkbar ist. Die Schwenkachse 22 verläuft im unbelasteten Zustand mittig durch die Lageranordnung 13, sodass zwei Federelemente 23 von der Schwenkachse 22 mittig durchsetzt werden. Dadurch erzeugen die Federelemente 23 somit nur geringe Kräfte, in einem Bereich kleiner 5% im Vergleich zu einer einstellbaren Vorspannung, beispielsweise über eine Vorspanneinrichtung 16 an einer motorfernen Seite der Schneckenwelle 10.

Da die Schneckenwelle 10 in der motornahen Lageranordnung 13 um die Schwenkachse 22 schwenkbar ist, ist vorgesehen, dass das motorferne Lager 15 sich auslenken lässt.

Das motorferne Wälzlager 15, welches als Loslager ausgebildet ist, ist in einem Schwenkhebel 150, vorzugsweise aus Kunststoff, angeordnet und wird mit der Vorspanneinrichtung 16 verbunden. Die Vorspanneinrichtung 16 weist eine Nadelrolle 160 auf, welche den Drehpunkt des Schwenkhebels 150 bildet. Axialverschiebungen der Schnecke 11, welche durch das Lagerspiel des Schwenklagers auftreten, werden durch Bewegungen des Schwenkhebels 150 entlang der Nadelrolle 160 kompensiert.

Die Figuren 5, 6 und 7 zeigen die Einzelheiten der Lageranordnung 13.

Zwei elastische Federelemente 23 verbinden den Schwenkring 21 mit dem Außenring 19. Die beiden elastischen Federelemente 23 weisen einen im Wesentlichen U-förmigen Querschnitt auf und besitzen eine Rückwand 23' von der zwei Seitenwände 23" etwa rechtwinklig abragen. Die beiden Federelemente 23 sind identisch ausgebildet. Die Federelemente 23 sind spiegelsymmetrisch zur Schwenkachse 22 der Lageranordnung 13 ausgestaltet. Die Federelemente 23 liegen mit der Innenseite 24 der Rückwand 23' in Anlage mit der Außenseite 25 des Schwenkrings 21 und umgreifen den Schwenkring 21 und den Außenring 19 auf der jeweiligen Außenseite. Die Federelemente 23 strecken sich somit im eingebauten Zustand von einer ersten Stirnseite 26 des Außenrings 19 zu einer zweiten Stirnseite 26' des Außenrings 19. Der Schwenkring 21 weist Konturen 27 auf, in die die Federelemente 23 mit ihren Seitenwänden 23" eingreifen können, so dass eine Fixierung der Lage des Schwenkrings 21 gegenüber dem Außenring 19 möglich ist. Weiterhin kann der Außenring 19 Konturen aufweisen, um eine bessere Fixierung zwischen Schwenkring 21, Außenring 19 und Federelement 23 zu ermöglichen. Wie in Figur 5 und Figur 6 dargestellt, weist der Schwenkring 21 dafür seitliche gegenüberliegende Aussparungen 27 an den Stirnseiten auf, in die das Federelement 23 eingreift. Die Federelemente 23 sind somit ortsfest mit dem Schwenkring 21 verbunden. Die Federelemente 23 können Aussparungen aufweisen, in die die Konturen des Schwenkrings 21 oder des Außenrings 19 eingreifen können. Die Federelemente 23 weisen weiterhin an ihren Seitenwänden Konturen 28 auf, die mit entsprechenden Konturen des Außenrings zusammenwirken. Diese Konturen sind ebenfalls bevorzugt an den Stirnseiten des Außenrings 19 vorgesehen. Die Konturen können komplementäre Vorsprünge, Aussparungen, Rastelemente, Hinterschneidungen und dergleichen umfassen, um eine kraftschlüssige und reibschlüssige Verbindung zu ermöglichen. Bei einer plastischen Verformung können die Seitenwände 23" der Federelemente 23 sich derart annähern, dass der Außenring 19 und der Schwenkring 21 eine gewünschte Zentrierung einnehmen und eine axiale Vorspannung bereitstellen.

Die Lage der Schneckenwelle 10 ist in Bezug auf das Schneckenrad 12 mittels einer Vorspanneinrichtung 16 einstellbar. Die Einstellung erfolgt dabei bevorzugt auf der motorfernen Seite der Schneckenwelle 10.

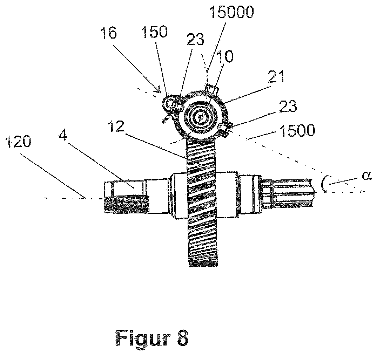

Die beiden Federelemente 23 sind in Umfangsrichtung der Lageranordnung 13 gegenüberliegend angeordnet. Sie liegen auf der Schwenkachse 22 der Lageranordnung, die senkrecht zur Drehachse 100 der Schneckenwelle 10 liegt. Die Federelemente 23 erzeugen somit nur geringe Schwenkmomente. Da die Federelemente 23 auf beiden Stirnseiten der Lageranordnung 13 angreifen und symmetrisch zur Lageranordnung ausgestaltet sind, heben sich im unbelasteten Zustand der Lageranordnung die Axialkräfte in Richtung der Drehachse 100 der Schneckenwelle auf. In Figur 8 ist ersichtlich, dass die durch die Federelemente 23 vorgegebene Schwenkachse 22 der Schneckenwelle 10 in einem definierten Winkel α zur Drehachse 120 des Schneckenrads 12 oder der Lenkwelle 3, 4 angeordnet ist. Die Schwenkachse 22 wird durch den definierten Winkel gebildet, welcher zwischen der Drehachse 120 des Schneckenrads 12 und durch eine Achse 1500 des Schwenkhebels 150 gebildet wird. Dieser Winkel hängt von der Positionierung oder Orientierung des Schwenkhebels 150 ab. Der definierte Winkel liegt vorzugsweise in einem Bereich zwischen 20° und 30°. Besonders bevorzugt nimmt der definierte Winkel einen Wert grösser als 25° an. Weiterhin ist in Figur 8 eine definierte Schwenkbahn 15000 der Lageranordnung 13 dargestellt.

Die Federelemente 23 spannen den im Schwenkring 21 angeordneten Außenring 19 axial vor, wodurch die Bewegung der Elemente 21, 19 gegeneinander gedämpft wird. Ein Anschlagen der Ringe 21, 19 gegeneinander wird somit verringert, was die Akustik der Lageranordnung 13 verbessert. Zudem wird durch die Federelemente 23 der Nulldurchgang der Axialbewegung versteift, wodurch ebenfalls störende Klappergeräusche vermieden werden können.

Auf eine Axialfeder in der Kupplung zwischen Motor und Schnecke kann verzichtet werden, was eine leichtere Schwenkbewegung und damit bessere Anfederung ermöglicht.

Die Federelemente können auch andere Formen annehmen und beispielsweise zweiteilig ausgestaltet sein oder mehrere Haltezungen aufweisen, welche gleiche oder unterschiedliche Formen, wie in Figur 6 dargestellt, annehmen können. Die Haltezungen können nach außen oder innen ragen. Weiterhin können die Haltezungen durch entsprechende Konturen des Schwenkrings 21 diesen umgreifen oder in diesen einrasten. Es kann auch vorgesehen sein, dass die beiden Federelemente sich über den gesamten Umfang der Lageranordnung erstrecken und jeweils nur eine Stirnseite abdecken. In diesen Fall würden Federzungen vorgesehen sein, die sich in Umfangsrichtung gegenüberliegen und auf der Schwenkachse liegend angeordnet sind. Die Trennung der beiden Federelemente würde dann in einer Ebene mit der Schwenkachse erfolgen.

Durch die Federelemente kann die Belastung der Kupplung verringert werden und die Verschwenkung vereinfacht werden, was sich auf die Lebensdauer der Kupplung und die Akustik positiv auswirkt.

## Patentansprüche

1. Elektromechanische Servolenkung mit einem elektrischen Servomotor mit einer Motorwelle, der eine mit einem Schraubrad (12) kämmende Welle (10) antreibt, wobei die Welle (10) in einem Getriebegehäuse (14) angeordnet und an ihrem motornahen Ende in einer Lageranordnung (13) um eine Drehachse (100) drehbar gelagert ist und um eine quer zur Drehachse (100) liegende Schwenkachse (22) in dem Getriebegehäuse (14) verschwenkbar gelagert ist, wobei wenigstens ein Federelement (23) vorgesehen ist, das ein mit der Welle (10) um die Schwenkachse (22) schwenkbewegliches Lagerelement (19) der Lageranordnung (13) federelastisch gegen ein im Getriebegehäuse (14) ortsfest angeordnetes Lagerelement (21) der Lageranordnung (13) axial vorspannt, wobei das Schraubrad (12) ein Schneckenrad und die Welle (10) eine Schneckenwelle ist, **dadurch gekennzeichnet, dass** genau zwei Federelemente (23) vorgesehen sind, die in Umfangsrichtung der Lageranordnung (13) gegenüberliegend angeordnet sind, und dass die Schwenkachse (22) der Schneckenwelle (10) in einem definierten Winkel (α) im Bereich zwischen 20° und 30° zu einer Drehachse (120) des Schneckenrads (12) angeordnet ist, wobei das wenigstens eine Federelement (23) im Querschnitt im Wesentlichen U-förmig ist.

2. Elektromechanische Servolenkung nach Anspruch 1, **dadurch gekennzeichnet, dass** die Federelemente (23) derart ausgestaltet sind, dass sich in einem eingebauten und unbelasteten Zustand der Lageranordnung (13) die von der Vorspannung in Axialrichtung der Drehachse (100) erzeugten Kräfte auf das um die Schwenkachse (22) schwenkbewegliche Lagerelement (21) aufheben.

3. Elektromechanische Servolenkung nach Anspruch 1, **dadurch gekennzeichnet, dass** die Schwenkachse (22) im Bereich der Lageranordnung (13) angeordnet ist und die Lageranordnung (13) durchsetzt.

4. Elektromechanische Servolenkung nach Anspruch 1, **dadurch gekennzeichnet, dass** die Schwenkachse (22) das wenigstens eine Federelement (23) mittig durchsetzt.

5. Elektromechanische Servolenkung nach einem der vorhergehenden Ansprüche, **dadurch gekennzeichnet, dass** das um die Schwenkachse (22) schwenkbewegliche Lagerelement ein Lagerring (19) ist, welcher zumindest teilweise von dem im Getriebegehäuse (14) ortsfest angeordneten Lagerelement (21) umfangsseitig umgeben ist, wobei der Lagerring (19) radial in dem Lagerelement (21) abgestützt ist und relativ zu dem Lagerelement (21) schwenkbar ist, und dass das wenigstens eine Federelement (23) an dem Lagerelement (21) befestigt ist, wobei der Lagerring (19) mittels des wenigstens einen Federelements (23) federelastisch gegen das Lagerelement (21) vorgespannt ist.

6. Elektromechanische Servolenkung nach einem der vorhergehenden Ansprüche, **dadurch gekennzeichnet, dass** das im Getriebegehäuse (14) ortsfest angeordnete Lagerelement (21) ein Schwenkring ist.

7. Elektromechanische Servolenkung nach Anspruch 6, **dadurch gekennzeichnet, dass** die Lageranordnung (13) ein Wälzlager (17) aufweist, dessen Außenring (19) den Lagerring bildet, der verschwenkbar in dem getriebegehäusefesten Schwenkring (21) angeordnet ist.

8. Elektromechanische Servolenkung nach Anspruch 6 oder 7, **dadurch gekennzeichnet, dass** das wenigstens eine Federelement (23) derart ausgestaltet ist, dass die auf den Lagerring (19) wirkende Federkraft für beide Schwenkrichtungen gleich ist.

9. Elektromechanische Servolenkung nach einem der vorhergehenden Ansprüche, **dadurch gekennzeichnet, dass** das wenigstens eine Federelement (23) das ortsfest angeordnete Lagerelement (21) und das um die Schwenkachse (22) schwenkbewegliche Lagerelement (19) auf der jeweiligen Außenseite umgreift.

10. Elektromechanische Servolenkung nach einem der vorhergehenden Ansprüche, **dadurch gekennzeichnet, dass** das wenigstens eine Federelement (23) Konturen (28) aufweist, die mit entsprechenden Konturen des ortsfest angeordneten Lagerelements (21) und/oder des um die Schwenkachse (22) schwenkbeweglichen Lagerelements (19) zusammenwirken und eine federelastische Verbindung zwischen dem ortsfest angeordneten Lagerelement (21) und dem um die Schwenkachse (22) schwenkbeweglichen Lagerelement (19) bilden.

11. Elektromechanische Servolenkung nach einem der vorhergehenden Ansprüche, **dadurch gekennzeichnet, dass** das Schneckenrad (12) mit einer Eingangswelle eines Lenkgetriebes eines Kraftfahrzeuges in Wirkverbindung steht und das Schneckenrad (12) auf einer Lenkwelle eines Kraftfahrzeuges angeordnet ist.

12. Elektromechanische Servolenkung nach einem der vorhergehenden Ansprüche, **dadurch gekennzeichnet, dass** das wenigstens eine Federelement (23) aus Federstahl oder Kunststoff hergestellt ist.

## Claims

1. Electromechanical servo steering system with an electric servomotor with a motor shaft which drives a shaft (10) which cogs with a helical gear (12), wherein the shaft (10) is arranged in a transmission housing (14) and is mounted rotatably about an axis of rotation (100) at its end near the motor in a bearing arrangement (13) and is mounted pivotably in the transmission housing (14) about a pivot axis (22) which lies transverse to the axis of rotation (100), wherein at least one spring element (23) is provided which axially pretensions a bearing element (19), which is pivotably movable with the shaft (10) about the pivot axis (22), of the bearing arrangement (13) in a spring-elastic manner against a bearing element (21), which is arranged in a stationary manner in the transmission housing (14), of the bearing arrangement (13), wherein the helical gear (12) is a worm gear and the shaft (10) is a worm shaft, **characterized in that** precisely two spring elements (23) are provided which are arranged oppositely in the circumferential direction of the bearing arrangement (13), and that the pivot axis (22) of the worm shaft (10) is arranged at a defined angle (α) in the range between 20° and 30° with respect to an axis of rotation (120) of the worm gear (12), wherein the at least one spring element (23) is substantially U-shaped in cross-section.

2. Electromechanical servo steering system according to Claim 1, **characterized in that** the spring elements (23) are configured in such a manner that, in an installed and unloaded state of the bearing arrangement (13), the forces generated by the pretensioning in the axial direction of the axis of rotation (100) on the bearing element (21), which is pivotably movable about the pivot axis (22), are cancelled out.

3. Electromechanical servo steering system according to Claim 1, **characterized in that** the pivot axis (22) is arranged in the region of the bearing arrangement (13) and penetrates through the bearing arrangement (13).

4. Electromechanical servo steering system according to Claim 1, **characterized in that** the pivot axis (22) centrally penetrates through the at least one spring element (23).

5. Electromechanical servo steering system according to one of the preceding claims, **characterized in that** the bearing element which is pivotably movable about the pivot axis (22) is a bearing ring (19) which is surrounded on the circumferential side at least partially by the bearing element (21) arranged in a stationary manner in the transmission housing (14), wherein the bearing ring (19) is supported radially in the bearing element (21) and is pivotable relative to the bearing element (21), and that the at least one spring element (23) is fastened to the bearing element (21), wherein the bearing ring (19) is pretensioned by means of the at least one spring element (23) in a spring-elastic manner against the bearing element (21).

6. Electromechanical servo steering system according to one of the preceding claims, **characterized in that** the bearing element (21) arranged in a stationary manner in the transmission housing (14) is a pivot ring.

7. Electromechanical servo steering system according to Claim 6, **characterized in that** the bearing arrangement (13) comprises a rolling bearing (17), the outer ring (19) of which forms the bearing ring which is arranged pivotably in the pivot ring (21) fixed on the transmission housing.

8. Electromechanical servo steering system according to Claim 6 or 7, **characterized in that** the at least one spring element (23) is configured in such a manner that the spring force acting on the bearing ring (19) is equal for both pivot directions.

9. Electromechanical servo steering system according to one of the preceding claims, **characterized in that** the at least one spring element (23) engages around the bearing element (21) arranged in a stationary manner and the bearing element (19) which is pivotably movable about the pivot axis (22) on the respective outside.

10. Electromechanical servo steering system according to any of the preceding claims, **characterized in that** the at least one spring element (23) has contours (28) which interact with corresponding contours of the bearing element (21) arranged in a stationary manner and/or of the bearing element (19) which is pivotably movable about the pivot axis (22) and form a spring-elastic connection between the bearing element (21) arranged in a stationary manner and the bearing element (19) which is pivotably movable about the pivot axis (22).

11. Electromechanical servo steering system according to one of the preceding claims, **characterized in that** the worm gear (12) is operatively connected to an input shaft of a steering gear of a motor vehicle and the worm gear (12) is arranged on a steering shaft of a motor vehicle.

12. Electromechanical servo steering system according to one of the preceding claims, **characterized in that** the at least one spring element (23) is produced from spring steel or plastic.

## Revendications

1. Direction assistée électromécanique comprenant un servomoteur électrique avec un arbre de moteur qui entraîne un arbre (10) s'engrenant avec une roue conique (12), l'arbre (10) étant disposé dans un boîtier de transmission (14) et étant supporté au niveau de son extrémité proche du moteur dans un agencement de palier (13) de manière à pouvoir tourner autour d'un axe de rotation (100) et étant supporté dans le boîtier de transmission (14) de manière à pouvoir pivoter autour d'un axe de pivotement (22) s'étendant transversalement à l'axe de rotation (100), au moins un élément de ressort (23) étant prévu, lequel précontraint axialement de manière élastique à ressort un élément de palier (19) de l'agencement de palier (13), déplaçable avec l'arbre (10) par pivotement autour de l'axe de pivotement (22), contre un élément de palier (21) de l'agencement de palier (13) disposé fixement dans le boîtier de transmission (14), la roue conique (12) étant une roue à denture hélicoïdale et l'arbre (10) étant une vis sans fin, **caractérisée en ce qu'il** est prévu exactement deux éléments de ressort (23) qui sont disposés à l'opposé l'un de l'autre dans la direction périphérique de l'agencement de palier (13), et **en ce que** l'axe de pivotement (22) de la vis sans fin (10) est disposé suivant un angle défini (α) dans une plage comprise entre 20° et 30° par rapport à un axe de rotation (120) de la roue à denture hélicoïdale (12), l'au moins un élément de ressort (23) ayant une section transversale essentiellement en forme de U.

2. Direction assistée électromécanique selon la revendication 1, **caractérisée en ce que** les éléments de ressort (23) sont configurés de telle sorte que dans un état installé et non sollicité de l'agencement de palier (13), les forces générées par la précontrainte dans la direction axiale de l'axe de rotation (100) sur l'élément de palier (21) déplaçable par pivotement autour de l'axe de pivotement (22) s'annulent.

3. Direction assistée électromécanique selon la revendication 1, **caractérisée en ce que** l'axe de pivotement (22) est disposé dans la région de l'agencement de palier (13) et traverse l'agencement de palier (13).

4. Direction assistée électromécanique selon la revendication 1, **caractérisée en ce que** l'axe de pivotement (22) traverse l'au moins un élément de ressort (23) centralement.

5. Direction assistée électromécanique selon l'une quelconque des revendications précédentes, **caractérisée en ce que** l'élément de palier déplaçable par pivotement autour de l'axe de pivotement (22) est une bague de palier (19) qui est entourée sur la périphérie au moins en partie par l'élément de palier (21) disposé fixement dans le boîtier de transmission (14), la bague de palier (19) étant supportée radialement dans l'élément de palier (21) et pouvant pivoter par rapport à l'élément de palier (21), et **en ce que** l'au moins un élément de ressort (23) est fixé à l'élément de palier (21), la bague de palier (19) étant précontrainte de manière élastique à ressort contre l'élément de palier (21) au moyen de l'au moins un élément de ressort (23).

6. Direction assistée électromécanique selon l'une quelconque des revendications précédentes, **caractérisée en ce que** l'élément de palier (21) disposé fixement dans le boîtier de transmission (14) est une bague pivotante.

7. Direction assistée électromécanique selon la revendication 6, **caractérisée en ce que** l'agencement de palier (13) présente un palier à roulement (17) dont la bague extérieure (19) forme la bague de palier qui est disposée de manière pivotante dans la bague pivotante (21) fixée au boîtier de transmission.

8. Direction assistée électromécanique selon la revendication 6 ou 7, **caractérisée en ce que** l'au moins un élément de ressort (23) est configuré de telle sorte que la force de ressort agissant sur la bague de palier (19) soit identique dans les deux directions de pivotement.

9. Direction assistée électromécanique selon l'une quelconque des revendications précédentes, **caractérisée en ce que** l'au moins un élément de ressort (23) vient en prise autour de l'élément de palier disposé fixement (21) et l'élément de palier (19) déplaçable par pivotement autour de l'axe de pivotement (22) sur le côté extérieur respectif.

10. Direction assistée électromécanique selon l'une quelconque des revendications précédentes, **caractérisée en ce que** l'au moins un élément de ressort (23) présente des contours (28) qui coopèrent avec des contours correspondants de l'élément de palier disposé fixement (21) et/ou de l'élément de palier (19) déplaçable par pivotement autour de l'axe de pivotement (22) et établissent une liaison élastique à ressort entre l'élément de palier disposé fixement (21) et l'élément de palier (19) déplaçable par pivotement autour de l'axe de pivotement (22).

11. Direction assistée électromécanique selon l'une quelconque des revendications précédentes, **caractérisée en ce que** la roue conique (12) est en liaison fonctionnelle avec un arbre d'entrée d'un mécanisme de direction d'un véhicule automobile et la roue conique (12) est disposée sur un arbre de direction d'un véhicule automobile.

12. Direction assistée électromécanique selon l'une quelconque des revendications précédentes, **caractérisée en ce que** l'au moins un élément de ressort (23) est fabriqué en acier à ressort ou en plastique.
